# EUROPEAN PATENT SPECIFICATION

(11) **EP 1 361 799 B1**
(45) Date of publication and mention of the grant of the patent: **05.04.2006**
(21) Application number: 02702301.9
(22) Date of filing: 23.01.2002
(51) Int. Cl.: A23G 1/02, A23G 1/00

(54) **ENZYMATICALLY HYDROLYSED COCOA IN CHOCOLATE FLAVOUR REACTIONS**
ENZYMATISCH HYDROLISIERTER KAKAO IN SCHOKOLADEAROMAREAKTIONEN
CACAO HYDROLYSE DE MANIERE ENZYMATIQUE DANS DES REACTIONS DE SAVEUR DU CHOCOLAT

(30) Priority: 14.02.2001 GB 0103618
(43) Date of publication of application: 19.11.2003
(73) Proprietor: SOCIETE DES PRODUITS NESTLE S.A., 1800 Vevey (CH)
(72) Inventor: HANSEN, Clark, Erik, CH-1066 Epalinges (CH); KOCHHAR, Sunil, CH-1073 Savigny (CH); JUILLERAT, Marcel Alexandre, CH-1000 Lausanne (CH)
(74) Representative: Thomas, Alain
(86) International application number: PCT/EP2002/000667
(87) International publication number: WO 2002/063974

(56) References cited:
- EP-A- 0 749 694
- EP-A- 0 940 085
- US-A- 2 965 490
- VOIGT J ET AL: "IN VITRO STUDIES ON THE PROTEOLYTIC FORMATION OF THE CHARACTERISTIC AROMA PRECURSORS OF FERMENTED COCOA SEEDS: THE SIGNIFICANCE OF ENDOPROTEASE SPECIFICITY" FOOD CHEMISTRY, ELSEVIER SCIENCE PUBLISHERS LTD, GB, vol. 51, 1994, pages 7-14, XP000878945 ISSN: 0308-8146
- JINAP S ET AL: "INFLUENCE OF ORGANIC ACIDS ON FLAVOUR PERCEPTION OF MALAYSIAN AND GHANAIAN COCOA BEANS" JOURNAL OF FOOD SCIENCE AND TECHNOLOGY, ASSOCIATION OF FOOD SCIENTISTS AND TECHNOLOGISTS, US, vol. 32, no. 2, 1 March 1995 (1995-03-01), pages 153-155, XP000618814 ISSN: 0022-1155
- VOIGT ET AL: "In-vitro formation of cocoa-specific aroma precursors: aroma-related peptides generated from cocoa-seed protein by cooperation of an aspartic endoprotease and a carboxypeptidase" FOOD CHEMISTRY, ELSEVIER SCIENCE PUBLISHERS LTD, GB, vol. 49, no. 2, 1994, pages 173-180, XP002106204 ISSN: 0308-8146 cited in the application
- BAIGRIE B D: "COCOA FLAVOUR" UNDERSTANDING NATURAL FLAVORS, XX, XX, 1994, pages 268-282, XP000645709

## Description

### Field of the Invention

The present invention relates to a process for the preparation of enzymatically hydrolysed cocoa liquor and use thereof in chocolate crumb manufacture and process flavour reactions. As used herein, the term chocolate also includes chocolate materials generally referred to as compound and ice cream coatings.

### Background to the Invention

Flavour precursors (reducing sugars, amino acids, peptides) in cocoa beans are formed enzymatically during post-harvest fermentation (Holden 1959, J Sci Food Agric 10:691-700; Mohr et al 1976, Fett Wiss Technol 78:88-95; Hansen et al, J Sci Food Agric 77:273-281). Several key enzymes are responsible for the production of the flavour precursors during the fermentation process. The storage globulins are hydrolysed by an aspartic endoprotease. Subsequent action of amino- and carboxypeptidase leads to the formation of free amino acids and peptides (Voigt et al 1994, Food Chem 49:173-180). Flavour precursors can be generated by *"in-vitro* fermentation" by incubating seeds, seed fragments or acetone powders in citric and acetic acid (Biehl and Passern 1982, J Sci Food Agric 33:1280-1290). During roasting the flavour precursors participate in Maillard reactions and form typical cocoa flavour volatiles. The correct amount and ratio of the flavour precursors are essential for achieving an optimal aroma profile in the roasted cocoa. It has now been recognized that the flavour precursor pool is one of the key factors which determines the final aroma during roasting of cocoa. Thus, there is currently interest in manipulation of the flavour precursor pool.

The manufacture of chocolate crumb includes several steps of evaporation, heating and vacuum drying of milk solids, sugar with or without cocoa liquor to obtain a stable crumb powder with 1-2% of moisture (Minifie 1974, Manufacturing Confectioner April: 19-26; Bouwman-Timmermans and Siebenga 1995, Manufacturing Confectioner June:74-79). The resulting chocolate crumb is used as an intermediary product in the manufacture of chocolate. Chocolate production using chocolate crumb involves mixing crumb with cocoa butter followed by refining, conching and tempering. Chocolate crumb generally forms a large proportion of the ingredients in finished milk chocolate.

Chocolate crumb flavour develops from flavour precursors in Maillard reactions during preparation of the crumb powder (Muresan et al 2000, Food Chem 68:167-174). This reaction gives the chocolate crumb a taste and colour which is desired for confectionery products. Lactose reacts in Maillard reactions with free amino acids/peptides and with milk protein-bound lysine residues. It is recognized that the lactose comes from the milk, whereas the amino acids and peptides come from cocoa liquor and milk. There is a low level of free amino acids in standard crumb ingredients. This low amount of free amino acids in the reaction mixture and the consumption of these free amino acids during crumb processing are a limiting factor during the generation of crumb powders with strong flavour intensity. The manipulation of the flavour precursor is also of interest with respect to chocolate crumb processing.

US 2965490 disclosed that enzyme treatment of unfermented and unroasted beans could replace cocoa fermentation. Flavour was developed by roasting the hydrolysed cocoa material without the addition of other ingredients. In this process, the amine and sugar flavour precursors were liberated by proteases and amylase, and were all of cocoa origin. This roasted material was then used as a cocoa flavour base. The preferred material was whole or broken beans and the treatment was performed after pH adjustment to 8.65.

EP 95201668 disclosed a process for the treatment of fermented cocoa liquor or nibs with proteases, in combination with invertase, glycosidase, pectinase, cellulase; oxidase, which overcomes variability in flavour precursor composition, and enables the use of cocoa at various stages of fermentation. The aim of this process was not to develop maximum hydrolysis of the cocoa protein, but rather to have a mild process to produce upgraded cocoa from poorly or under-fermented beans.

Many attempts have been made to increase the level of flavour precursors in chocolate flavour reactions. For example, US-A-2,887,388 and US-A-2,835,592 disclosed processes for the production of artificial chocolate flavour by reacting reducing sugars and protein hydrolysates of corn, wheat, hemp, soy, rye, oats, peanut, barley, animal and fish proteins. Another approach, to enhance cocoa flavour was to increase the free amino acid pool. US-A-5, 676,993 disclosed a process for enhancing cocoa flavour by roasting a combination of amino acids and reducing sugars in fat matrixes such as cocoa nibs (soaking), cocoa liquor or cocoa butter. According to US-A-5,676,993 cocoa flavour is enhanced in the fat matrix by adding hydrophobic free amino acids such as phenylalanine, leucine, tyrosine, arginine, valine and/or isoleucine and reducing sugar, such as glucose, fructose, arabinose or mixtures thereof.

An object of the present invention is to produce enzymatically a cocoa liquor ingredient with a high content of flavour precursors for use in chocolate flavour reactions. The flavour reactions might include other chocolate ingredients such as milk and sugar for crumb production or pure flavour precursors such as reducing sugars or amino acids to produce concentrated process flavours.

### Summary of the Invention

According to one aspect of the present invention there is provided a process for the production of enzymatically-treated unfermented cocoa liquor comprising acid treatment of the cocoa liquor followed by protease treatment.

Another aspect of the invention is the use of enzymatically hydrolysed cocoa liquor in generation of process flavour reactions or in the production of chocolate crumb.

A still further aspect of the present invention is a chocolate or compound product produced using chocolate crumb or process flavour made using the enzymatically treated cocoa liquor.

### Detailed description of the Invention

The acid treatment is performed as an *in-vitro* fermentation step to activate the endogenous enzyme system and to utilize the endogenous proteases in cocoa. The subsequent protease treatment is applied to obtain high degree of hydrolysis (DH) and a high level of reactive free amino acids and peptides. This treatment is used to increase the flavour precursor pool during chocolate flavour reactions. Cocoa hydrolysates produced in accordance with this process are used as an ingredient in a crumb process as well as an ingredient in process flavour reactions. The cocoa liquor hydrolysates may be used alone or together with other ingredients or flavour precursors, such as amino acids, peptides or sugars, as a source of amine flavour precursors in process flavour reactions.

The cocoa liquor may be fully or partially defatted prior to use. Such use of fully or partially defatted cocoa liquor enables flexible use of different cocoa materials as a base ingredient in process flavour reaction. Preferably, the acid treatment involves decreasing the pH of the unfermented cocoa liquor to approximately pH 2 to 5, most preferably to pH 4. Preferably, acetic acid, citric acid or phosphoric acid is used at a concentration of from about 0.01 to about 1.0 M. Protease treatment involves the incubation of the unfermented cocoa liquor mixture with an endoprotease and/or exoprotease. Preferably, from 0.1 % to 5% protease based on dry weight of cocoa is used. Most preferably, the cocoa is incubated with 0.1 M acetic acid at 50 °C for 6 hours, followed by treatment with 2% protease, based on dry weight of cocoa, for 18 hours at 50 °C. Treatment times for both the acid and protease treatment are preferably from 1 to 48 hours.

The treated cocoa liquor can be used in the production of chocolate crumb. The manufacture of chocolate crumb is described in EP 99200416. A further use is the use of the treated cocoa liquor in process flavour reactions. In the flavour reactions generation of a balanced cocoa flavour is not the only criterion. The introduction of other attributes, for example caramel, biscuit, fruity and malt are also of interest. Thus, another objective was to produce a cocoa ingredient with a maximum degree of hydrolysis for use in chocolate flavour reactions.

The chocolate crumb or the process flavours made using the treated cocoa liquor can be used in the manufacture of compound chocolate, ice-cream coatings and in other food products, desserts and drinks.

The invention will now be described with reference to the following non-limiting examples.

### Preparative Example 1:

### Preparation of Cocoa Liquor:

West African Amelonado cocoa beans were fermented for 0 to 7 days. The fermented and unfermented beans were sun dried and hand-peeled. Cocoa nibs were roasted for 130 °C for 45 minutes in a Sanyo OMT oven MKII with fan circulation. Unroasted or roasted nibs were milled for 2 min in an IKA M20 laboratory mill followed by two passages through an Exact triple roll mill. Particle size of the liquor was analysed by laser scattering (Malvern). The average particle size by this treatment was 20 µm. Defatting of cocoa was performed on cocoa material which had been milled for a few seconds under cooling in an IKA M20 laboratory mill followed by passing through a 0.8 mm sieve. Cocoa (20 g) was reacted under reflux with 200 ml hexane for a minimum of 6 h. This treatment removed 50% of dry weight. Fermented, unroasted liquor and fermented, roasted liquor were also prepared. Cocoa liquor suspensions were treated after enzyme incubation at 90 °C, 10 min for enzyme inactivation and pasteurisation. Moisture was removed by incubating the liquor at 70-80 °C without or with vacuum.

### Preparative Example 2:

### Crumb production:

Chocolate crumb was prepared using the following ingredients, 131 g of skimmed milk powder, 44 g sugar and 26 g of cocoa liquor. The cocoa liquor was melted at 50 °C. The sugar and the skimmed milk powder were added and the mixture was incubated in a Winkworth Z-blade mixer at 100 rpm to 90 °C. Water (6%) was added dropwise during 2 min, and the reaction of the ingredients to form the typical crumb flavour was performed for 15 min at 90 °C. After reaction, the crumb powder was removed from the mixer and let cool to room temperature.

Sensory evaluation of the crumb powder was performed by adding water heated to 65 °C and mixing with 30 g of crumb powder. The paste mixture in a beaker was covered and the paste was tasted after 30 min at ambient temperature. A panel with the same 6-9 persons tested all the samples. A scale from 1 (low) to 10 (high) was defined for the attributes: cocoa, milk, malt, biscuit, caramel, sweet and bitter

### Example 1:

### Proteolysis of Unfermented Cocoa Liquor Via Pre-treatment with Acetic Acid

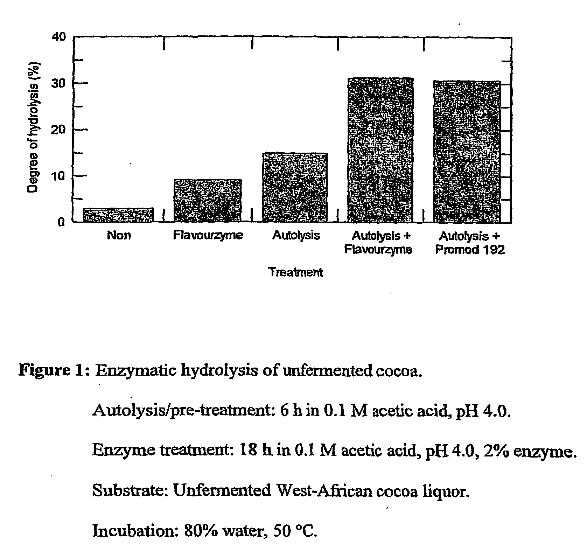

0.1 M acetic acid, pH 4.0 was added to unfermented cocoa liquor. The liquor was incubated for 6 h followed by 18 h incubation with the exogenous protease mixtures (2%), Flavourzyme or Promod 192. This approach resulted in significant proteolysis (DH 30%) as compared to Flavourzyme addition (DH 9.5%) or by 24 h autolysis alone (DH 14.9%), (Figure 1).

### Example 2:

### Cocoa liquor enzymatic treatment:

The following enzymes were used in this example, i) Flavourzyme 1000L: Fungal endo- and exo-protease mixture (pH range 4-8), ii) Promod 192: Fungal amino- and carboxy-peptidase mixture (pH range 4-6), and iii) Promod: Fungal carboxy-peptidase (pH range 5-9). The enzyme was dissolved in the water (50°C) which was then added to the melted cocoa liquors produced in accordance with preparative example 1. Depending on the viscosity, the reactions were carried out in shaking flasks, glass reactors, jacketed with water circulation or in a Winkworth laboratory Z-blade mixer, Type AZ, jacketed with oil circulation.

To test the flavour changes of the enzymatically treated liquors, canach (50% sugar, 50% liquor) were prepared from the enzymatically treated liquors. The canach samples were evaluated by sensory evaluation.

The following hydrolysis reactions were performed:
Long (24h) autolysis: 0.1 M acetic acid, pH 4.0, 50 °C
Short (6 h) autolysis: 0.1 M acetic acid, pH 4.0, 50 °C
Long (24 h) hydrolysis: 0.1 M acetic acid, pH 4.0 for 6 h, then 2% Flavourzyme for 18 h
Short (6 h) hydrolysis: 0.1 M acetic acid, pH 4.0 for 3 h, then 2% Flavourzyme for 3 h

Compared to the unfermented starting material, there was a strong decrease in astringent, unfermented, green and beany notes in all treated samples. This was accompanied by an increase in the cocoa flavour intensity. Autolysis, using acetic acid alone, resulted in a wide range of flavours such as cereal, roasted and fruity after 6 h and 24 h of autolysis. Autolysis combined with enzyme hydrolysis, resulted in further positive attributes. In particular, a malt note was found in the enzyme-hydrolysed liquor.

### Example 3:

### Optimisation of protease treatment of cocoa liquor

Several hydrolysates were produced using different enzyme concentrations and moisture content. Autolysis in 0.1 M acetic acid, pH 4.0 without technical enzymes resulted in DH 15, 12 and 10 in presence of 80, 50 and 25% moisture, respectively. Autolysis in water, however, resulted only in DH 6. In presence of high enzyme concentration (2% of cocoa dry weight), DH 30, 35, and 29 were achieved with 80, 50 and 25% moisture, respectively (Table 1). No further increase in DH was achieved when total incubation time was increased from 24 to 48hrs. There was a strong effect of enzyme concentration on DH after 24 h of incubation. DH 35, 23 and 16 were achieved with 2, 0.5 and 0.1% Flavourzyme, respectively.

It is possible to generate cocoa with DH 10-15% by only autolysis (*"in-vitro* fermentation"), (Table 1). Maximum DH in unfermented/unroasted cocoa liquor is achieved with 6 h *"in-vitro*-fermentation" in 0.1 M acetic acid, pH 4.0 followed by 18 h incubation with 2% (of dry weight cocoa) Flavourzyme at 50 °C using 50% moisture. With reduced moisture (25%), however, substantial high DH (29%) is also achieved (Table 1).

Lower degree of hydrolysis was achieved with fermented/roasted cocoa liquor. DH 6-12 were obtained under various hydrolysis conditions using West African fermented/roasted cocoa liquor (Table 2). Thus, unfermented/unroasted cocoa liquor is the best suitable substrate for producing high DH cocoa liquor.

**Table 1: Optimisation of protein hydrolysis in unfermented and unroasted cocoa liquor Substrate: West-African Amelonado cocoa liquor. Incubation at 50 °C.**

| Moisture (%) 0.1 M acetic acid, pH 4.0 | Flavourzyme (%) | Pre-incub. + incub. (hours) | NH₂ µmol/g dry w | DH % |
|---|---|---|---|---|
| Untreated liquor | - | - | 28.6 | 3 |
| 80 | - | 24+24 | 141.0 | 15 |
| 50 | - | 24 + 24 | 113.7 | 12 |
| 25 | - | 24 + 24 | 88.6 | 10 |
| 80 (water) | - | 24 | 58.1 | 6 |
| 80 (water) | 2.0 | 24 + 24 | 141.3. | 15 |
| 80 | 2.0 | 6 + 18 | 278.5 | 30 |
| 80 | 2.0 | 24 + 24 | 277.5 | 30 |
| 50 | 2.0 | 6 + 18 | 325.1 | 35 |
| 50 | 2.0 | 24 + 24 | 332.4 | 36 |
| 50 | 0.5 | 6+18 | 214.5 | 23 |
| 50 | 0.1 | 6+18 | 145.4 | 16 |
| 25 | 2.0 | 6 + 18 | 269.2 | 29 |
| 25 | 2.0 | 24 + 24 | 232.9 | 25 |
| 25 | 0.5 | 6+18 | 119.4 | 13 |

**Table 2: Optimisation of protein hydrolysis in fermented and roasted cocoa liquor. Substrate: West-African cocoa liquor. Incubation at 50 °C.**

| Moisture (%) water | Flavourzyme (%) | Pre-incub. + incub. (hours) | NH2 µmol/g dry w | DH % |
|---|---|---|---|---|
| Untreated liquor | - | - | 31.9 | 4 |
| 50 | 2.0 | 0 + 24 | 104.4 | 12 |
| 50 (0.1 M acetic acid, pH 4) | 2.0 | 6 + 18 | 78.5 | 9 |
| 50 | 0.5 | 0+24 | 74.1 | 9 |
| 50 | 0.1 | 0 + 24 | 55.4 | 6 |
| 25 | 2.0 | 0 + 24 | 85.3 | 10 |

The free amino acid profile was analysed in unfermented cocoa liquor before and after combined *"in-vitro* fermentation"/Flavourzyme treatment. A strong accumulation of hydrophobic amino acids (ala, val, leu, phe) was found in enzyme treated cocoa. The level and profile was similar to that found in West African fermented/roasted reference cocoa. Thus, using unfermented cocoa liquor, it is possible to produce cocoa with DH 30 with an amino acid profile which is characteristic for fermented cocoa. The increase in DH after enzymatic treatment of unfermented cocoa is accompanied by an increase in free amino acids from 18 to 60 µmol/g. This corresponds to a level which is normally found in fermented, unroasted reference cocoa

### Example 4:

### Enzymatic treatment of defatted cocoa liquor

Enzymatically treated cocoa liquor was prepared according to example 3, except that the cocoa liquor used was totally or partially defatted. Similar degree of protein hydrolysis was achieved when compared to total cocoa liquor.

### Example 5 :

### Use of Enzymatically Treated Cocoa Liquor in Chocolate Crumb Processing

Crumb was prepared, using enzymatically treated cocoa liquors which had been prepared in accordance with preparative example 2. Crumb was prepared using enzyme-treated liquor from unfermented/unroasted as well as fermented/roasted beans. The enzyme-treated liquor from unfermented/unroasted beans was dried and incorporated directly into the crumb reaction or liquor-roasted before used in the crumb. The enzyme-treated cocoa liquors from fermented/roasted beans, were not dried, and incorporated directly into the crumb reaction to yield final moisture of 9 and 6.4%. Wet incorporation into the crumb mixture was performed to exclude loss of volatiles during drying.

The resultant crumb samples resulted in sensory profiles which were similar to the crumb produced by West African reference cocoa liquor (fermented and roasted) in accordance with preparative example 2. From these experiments, it can be concluded that crumb can be prepared from enzymatically treated cocoa liquor without introducing major off-flavours. The malt note was enhanced by all treatments, especially by including liquor-roasting prior to the crumb reaction. Thus, enzyme treatment of cocoa liquor can be used for flavour enhancement and differentiation in chocolate crumb reactions.

### Example 6:

### Use of enzymatically treated cocoa liquor in reaction flavours :

A reference cocoa reaction flavour was prepared by reacting 0.8% Leu, 1.45% Phe, 0.8% Val, 1.5% Fructose, 1.5% water (4 drops of NaOH in 20ml water) and 94% propylene glycol at 125°C for 60 min under reflux. Reaction flavours, prepared with cocoa hydrolysates were generated by replacing the amino acids with 1% lyophilised hydrolysate. Tasting was performed on a 0.1% solution in 1% sucrose. The reaction flavours produced with cocoa hydrolysates were tasted and compared against the reference.

The following enzyme treatments were investigated: 24 h and 6 h *in-vitro* fermentation/Flavourzyme treatment, and 24 h and 6 h *in-vitro* fermentation (only endogenous enzyme system).

Reaction flavours prepared with enzyme-treated liquor exhibited stronger cocoa flavour compared to a control prepared with untreated unfermented/unroasted cocoa liquor. In particular, the reaction flavours produced with liquor that was treated by only *in-vitro* fermentation seemed strongest in cocoa flavour.

The reaction flavours generated with 1% cocoa liquor hydrolysates in PG do not contain similar amount of reacting amino groups as in the amino acid reference. The reference is prepared with 0.8% leu, 1.45% phe, 0.8% val, 1.5% fructose, whereas the reaction mixtures with cocoa hydrolysates contains substantially lower level of free amino groups (10-15% protein, DH 10-30). Thus, the amount of reactive amine flavour precursors can be increased substantially by increasing the proportion of hydrolysed cocoa liquor.

The cocoa hydrolysates, described in this example, can be used as a base ingredient in chocolate process flavour reactions to introduce a base or specific note for a full body chocolate/cocoa flavour concentrate.

## Claims

1. A process for the production of enzymatically-treated unfermented cocoa liquor comprising acid treatment of the cocoa liquor which involves decreasing the pH of the cocoa liquor to 2 to 5 followed by protease treatment.

2. A process according to claim 1 wherein the cocoa liquor is fully or partially defatted.

3. A process according to any of the preceding claims wherein the acid is acetic acid, citric acid or phosphoric acid.

4. A process according to claim 3 wherein from 0.01 to 1.0 M acid is used.

5. A process according to any of the preceding claims wherein acid treatment occurs for 1 to 48 hours.

6. A process according to any of claims 1 to 5 wherein the protease treatment involves incubation of the unfermented cocoa liquor mixture with protease.

7. A process according to any of the preceding claims wherein from 0.1 % to 5% protease based on dry weight of cocoa is used..

8. A process according to any of the preceding claims wherein the protease treatment occurs for 1 to 48 hours.

9. A process according to any of the preceding claims wherein protease treatment occurs at 40 to 60C.

10. Use of enzymatically-treated unfermented cocoa liquor produced in accordance with any of claims 1 to 9 in the production of chocolate crumb.

11. Use of enzymatically-treated unfermented cocoa liquor produced in accordance with any of claims 1 to 9 in the production of a cocoa reaction flavour.

12. Use of enzymatically-treated unfermented cocoa liquor as claimed in claim 11 in combination with other ingredients or flavour precursors in the production of the cocoa reaction flavour.

13. A chocolate product produced using chocolate crumb made in accordance with claim 10.

14. A chocolate product produced using a cocoa reaction flavour made in accordance with either claim 11 or claim 12.

## Patentansprüche

1. Verfahren zur Herstellung einer enzymatisch behandelten unfermentierten Kakaomasse, das eine Säurebehandlung der Kakaomasse umfasst, die die Verminderung des pH der Kakaomasse auf 2 bis 5 beinhaltet, gefolgt von einer Proteasebehandlung.

2. Verfahren nach Anspruch 1, wobei die Kakaomasse vollständig oder teilweise entfettet ist.

3. Verfahren nach irgendeinem der vorausgehenden Ansprüche, wobei die Säure Essigsäure, Citronensäure oder Phosphorsäure ist.

4. Verfahren nach Anspruch 3, wobei von 0,01 bis 1,0 M Säure verwendet wird.

5. Verfahren nach irgendeinem der vorausgehenden Ansprüche, wobei die Säurebehandlung 1 bis 48 Stunden dauert.

6. Verfahren nach irgendeinem der Ansprüche 1 bis 5, wobei die Proteasebehandlung die Inkubation der unfermentierten Kakaomassen-Mischung mit Protease beinhaltet.

7. Verfahren nach irgendeinem der vorausgehenden Ansprüche, wobei von 0,1 % bis 5 % Protease, bezogen auf das Trockengewicht des Kakaos, verwendet wird.

8. Verfahren nach irgendeinem der vorausgehenden Ansprüche, wobei die Proteasebehandlung 1 bis 48 Stunden dauert.

9. Verfahren nach irgendeinem der vorausgehenden Ansprüche, wobei die Proteasebehandlung bei 40 bis 60°C abläuft.

10. Verwendung einer enzymatisch behandelten unfermentierten Kakaomasse, die gemäß irgendeinem der Ansprüche 1 bis 9 hergestellt wurde, bei der Herstellung von Schokolade-Crumb.

11. Verwendung von enzymatisch behandelter unfermentierter Kakaomasse, die gemäß irgendeinem der Ansprüche 1 bis 9 hergestellt wurde, bei der Herstellung eines Kakao-Reaktionsaromas.

12. Verwendung von enzymatisch behandelter unfermentierter Kakaomasse nach Anspruch 11 in Kombination mit anderen Zutaten oder Aromavorläufern bei der Herstellung von Kakao-Reaktionsaroma.

13. Schokoladeprodukt, hergestellt unter Verwendung von Schokolade-Crumb, der gemäß Anspruch 10 hergestellt wurde.

14. Schokoladeprodukt, hergestellt unter Verwendung eines Kakao-Reaktionsaromas, das gemäß Anspruch 11 oder Anspruch 12 hergestellt wurde.

## Revendications

1. Procédé pour la production d'une liqueur de cacao non fermentée traitée enzymatiquement comprenant un traitement acide de la liqueur de cacao qui comporte un abaissement du pH de la liqueur de cacao à 2 à 5, suivi d'un traitement protéasique.

2. Procédé selon la revendication 1, dans lequel la liqueur de cacao est dégraissée totalement ou partiellement.

3. Procédé selon l'une quelconque des revendications précédentes, dans lequel l'acide est l'acide acétique, l'acide citrique ou l'acide phosphorique.

4. Procédé selon la revendication 3, dans lequel on utilise de l'acide 0,01 à 1,0 M.

5. Procédé selon l'une quelconque des revendications précédentes, dans lequel le traitement acide dure 1 à 48 heures.

6. Procédé selon l'une quelconque des revendications 1 à 5, dans lequel le traitement protéasique comporte l'incubation du mélange de liqueur de cacao non fermentée avec une protéase.

7. Procédé selon l'une quelconque des revendications précédentes, dans lequel on utilise 0,1 % à 5 % de protéase par rapport au poids sec de cacao.

8. Procédé selon l'une quelconque des revendications précédentes, dans lequel le traitement protéasique dure 1 à 48 heures.

9. Procédé selon l'une quelconque des revendications précédentes, dans lequel le traitement protéasique a lieu entre 40 et 60°C.

10. Utilisation d'une liqueur de cacao non fermentée traitée enzymatiquement, produite selon l'une quelconque des revendications 1 à 9, dans la production de miettes de chocolat.

11. Utilisation d'une liqueur de cacao non fermentée traitée enzymatiquement, produite selon l'une quelconque des revendications 1 à 9, dans la production d'un arôme de réaction de cacao.

12. Utilisation d'une liqueur de cacao non fermentée traitée enzymatiquement selon la revendication 11, en association avec d'autres ingrédients ou précurseurs d'arôme dans la production de l'arôme de réaction de cacao.

13. Produit chocolatier, produit en utilisant des miettes de chocolat préparées selon la revendication 10.

14. Produit chocolatier, produit en utilisant un arôme de réaction de cacao préparé selon la revendication 11 ou la revendication 12.
